# EUROPEAN PATENT SPECIFICATION

(11) **EP 2 759 155 B1**
(45) Date of publication and mention of the grant of the patent: **14.09.2016**
(21) Application number: 12810194.6
(22) Date of filing: 14.12.2012
(51) Int. Cl.: H04W 8/18, H04W 88/06

(54) **DYNAMICALLY ADJUSTING CAPABILITIES OF MODEMS, EACH MODEM ASSOCIATED WITH A DIFFERENT SUBSCRIBER IDENTITY**
DYNAMISCHE ANPASSUNG DER FÄHIGKEITEN VON MODEMS MIT UNTERSCHIEDLICHEN TEILNEHMERIDENTITÄTEN
AJUSTEMENT DYNAMIQUE DES CAPACITÉS DE MODEMS, CHAQUE MODEM ÉTANT ASSOCIÉ À UNE IDENTITÉ D'ABONNÉ DIFFÉRENTE

(43) Date of publication of application: 30.07.2014
(73) Proprietor: Huawei Technologies Co., Ltd., Longgang District Shenzhen, Guangdong 518129 (CN)
(72) Inventor: MANSSON, Philip, SE-244 66 Furulund (SE); SINGVALL, Jakob, SE-237 34 Bjärred (SE)
(74) Representative: Gill Jennings & Every LLP
(86) International application number: PCT/EP2012/075630
(87) International publication number: WO 2014/090339

(56) References cited:
- EP-A1- 2 302 973
- EP-A1- 2 469 897
- CN-A- 101 198 127
- KR-A- 20110 056 164
- US-A1- 2009 186 651
- US-A1- 2011 081 951

## Description

### TECHNICAL FIELD

Implementations described herein relate generally to a communication device and a method in a communication device. In particular is herein described a mechanism for dynamic mapping of modem resources on a communication device comprising more than one subscription identity.

### BACKGROUND

A communication device, also known as User Equipment (UE), mobile station, wireless terminal, receiver and/or mobile terminal may be enabled to communicate wirelessly in a wireless communication system, sometimes also referred to as a cellular radio system. The communication may be made e.g. between two communication devices, between a communication device and a wire connected telephone and/or between a communication device and a server via a Radio Access Network (RAN) and possibly one or more core networks.

The communication device may further be referred to as mobile telephone, cellular telephone, computer tablet or laptop with wireless capability. The communication devices in the present context may be, for example, portable, pocket-storable, handheld, computer-comprised, or vehicle-mounted mobile devices, enabled to communicate voice and/or data, via the radio access network, with another entity, such as another communication device or a server.

The wireless communication system covers a geographical area which is divided into cell areas, with each cell area being served by a radio network node, or base station e.g. a Radio Base Station (RBS), which in some networks may be referred to as transmitter, "eNB" , "eNodeB" "NodeB" or "B node" depending on the technology and terminology used. The radio network nodes may be of different classes such as e.g. macro eNodeB, home eNodeB or pico base station, based on transmission power and thereby also cell size. A cell is the geographical area where radio coverage is provided by the radio network node/ base station at a base station site. One radio network node, situated on the base station site, may serve one or several cells. The radio network nodes communicate over the air interface operating on radio frequencies with the communication devices within range of the respective radio network node.

In some radio access networks, several radio network nodes may be connected, e.g. by landlines or microwave, to a Radio Network Controller (RNC) e.g. in Universal Mobile Telecommunications System (UMTS). The RNC, also sometimes termed Base Station Controller (BSC) e.g. in GSM, may supervise and coordinate various activities of the plural radio network nodes connected thereto. GSM is an abbreviation for Global System for Mobile Communications (originally: Groupe Special Mobile).

In 3rd Generation Partnership Project (3GPP) Long Term Evolution (LTE), radio network nodes, which may be referred to as eNodeBs or eNBs, may be connected to a gateway e.g. a radio access gateway, to one or more core networks.

In the present context, the expressions downlink (DL), downstream link or forward link may be used for the transmission path from the radio network node to the communication device. The expression uplink (UL), upstream link or reverse link may be used for the transmission path in the opposite direction i.e. from the communication device to the radio network node.

A communication device may sometimes comprise two, or more, subscriber identities, such as Subscriber Identity Modules (SIMs). Such a communication device may occasionally be referred to as a Dual SIM phone, or Multiple SIM phone. Each subscriber identity of such communication device may be associated with a modem that is configured for communication over a certain Radio Access Technology (RAT), such as GSM, UMTS, LTE etc.

The modem functionality is normally instantiated in order to support simultaneous reception/transmission per SIM. The cost for this implementation in terms of power consumption is high. Also, such implementation brings added costs for introducing components working in parallel in the communication device.

Another approach is to implement full modem functionality for one of the SIMs, which may be determined to be the primary SIM and only limited modem functionality for the other SIM(s) such that only limited services are supported by the non-primary SIM(s), such as e.g. voice and/or Multimedia Messaging Service (MMS). Moreover, the radio access technology support for the non-primary SIM may be restricted, e.g. GSM only. The cost for this implementation is less compared to the previously mentioned approach. However, this approach has drawbacks in terms of functionality of the communication device, and user experience. That is, in order to change the capabilities of the communication device associated with a SIM/subscription the user must either manually remove the SIMs and change SIM slots, and possibly restart the communication device, or in case the communication device supports software controlled switch of SIMs, manually select which SIM is primary via a user interface or physical switch.

However, this second approach has the disadvantage that full modem functionality is assigned only to the primary SIM, while only limited modem functionality is assigned to the other SIM/s, or secondary SIM/s. Thus features like support of radio access technology and bit rates associated with secondary SIM/s are not fully used, which results in bad user experience.

In a Dual/Multiple SIM single active phone where only one SIM is enabled at a time, the user experience is limited since the user must manually select which SIM should be active at a specific time instance. The same procedure as mentioned above needs to be performed in order to carry out the SIM switch. Such manual switch may cause inconvenience for the user.

EP-A-2302973, US-A-2009186651 and EP-A-2469897 all disclose methods in a communication device configured for multiple subscriber identities.

US-A-2011117909, US-A-2010240414 and GB-A-2487275 all disclose methods in a communication device configured to adjust the capabilities in modems.

It is therefore an object to obviate at least some of the above mentioned disadvantages and to improve the performance in a communication infrastructure.

According to a first aspect, the object is achieved by a method in a communication device configured for multiple subscriber identities, comprising a first subscriber identity associated with a first modem having a first capability, being a primary subscriber identity, used by the communication device for communication, and at least a second subscriber identity associated with a second modem having a second capability, being a secondary subscriber identity, for adjusting the capabilities of the modems, comprising: acquiring an indication to adjust capabilities of the modems; re-registering the first modem, thereby releasing capacity of the first modem; and re-registering the second modem, thereby increasing capacity of the second modem; wherein the action of acquiring the indication comprises: obtaining a signal indicating a reduction of network coverage or capability of the first modem, requesting the second modem to check and report network coverage or capability, and generating the indication to adjust capabilities of the modems to match the respective network coverage and capability, such that in the case the first subscriber identity is associated with a first radio access technology, for which a diminished, reduced, disturbed or non-existent coverage is detected, modem capabilities are transferred from the first subscriber identity to the second subscriber identity which may be associated with a second radio access technology, and vice versa.

According to a second aspect, the object is achieved by a communication device configured for multiple subscriber identities, comprising a first subscriber identity associated with a first modem having a first capability, being a primary subscriber identity, used by the communication device for communication, and at least a second subscriber identity associated with a second modem having a second capability, being a secondary subscriber identity, for adjusting the capabilities of the modems, comprising: a processing circuit configured for acquiring an indication to adjust capabilities of the modems; and configured for re-registering the first modem, thereby releasing capacity of the first modem; and also configured for re-registering the second modem, thereby increasing capacity of the second modem, the processing circuit being further configured for obtaining a signal indicating a reduction of network coverage, or capability, of the first modem, and configured for requesting the second modem to check and report network coverage and/or capability; and in addition configured for generating the indication to adjust capabilities of the modems to match the respective network coverage and/or capability, such that in the case the first subscriber identity is associated with a first radio access technology, for which a diminished, reduced, disturbed or non-existent coverage is detected, modem capabilities are transferred from the first subscriber identity to the second subscriber identity which may be associated with a second radio access technology, and vice versa.

By enabling adjustment of capabilities between the modems in an automated manner based on one or more triggering events, the full functionality of a dual SIM/dual active (or a multi SIM/multi active) is achieved, even if only one SIM of the communication device is enabled at the time. Thereby, the user is relieved from tedious labour of either manually switching SIMs, or from selecting which SIM to be used as primary SIM.

Thereby, the user may enjoy an enhanced communication experience. Thus an improved performance within a wireless communication infrastructure is provided.

Other objects, advantages and novel features of the described embodiments of the invention will become apparent from the following detailed description.

### BRIEF DESCRIPTION OF THE DRAWINGS

Embodiments of the invention are described in more detail with reference to attached drawings illustrating examples of embodiments in which:
- Figure 1: is a block diagram illustrating an infrastructure overview, wherein the invention is implemented.
- Figure 2: is a combined flow chart and signalling scheme illustrating an embodiment of the invention.
- Figure 3: is a flow chart illustrating a method according to some embodiments of the invention.
- Figure 4: is a block diagram illustrating a communication device according to an embodiment of the invention.

### DETAILED DESCRIPTION

Embodiments of the invention described herein are defined as a communication device and a method in a communication device, which may be put into practice in the embodiments described below. These embodiments may, however, be exemplified and realised in many different forms and are not to be considered as limited to the embodiments set forth herein; rather, these embodiments are provided so that this disclosure will be thorough and complete.

Still other objects and features may become apparent from the following detailed description considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

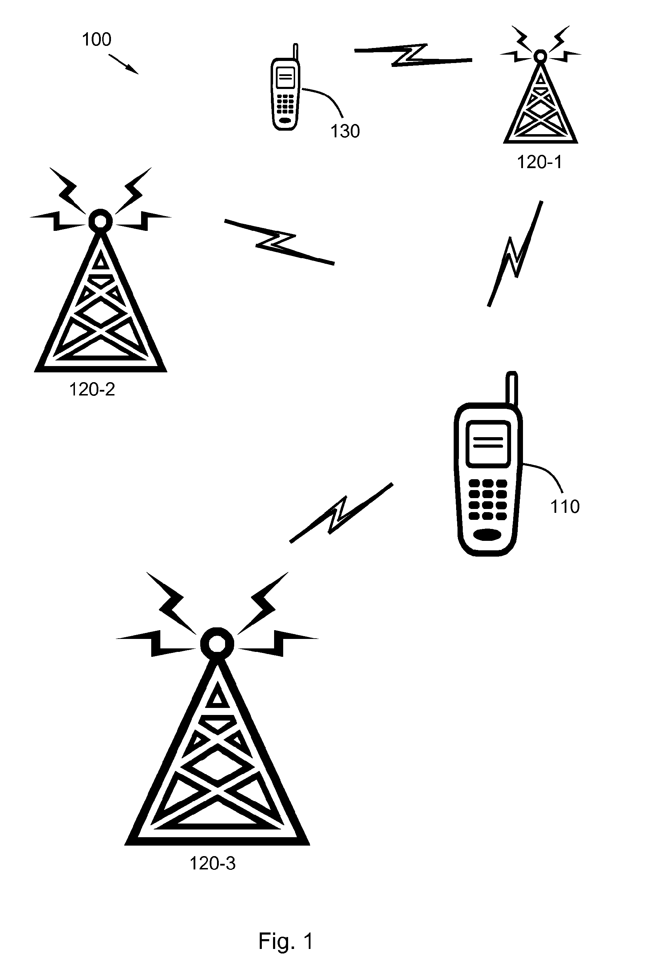

**Figure 1** is a schematic illustration over a wireless communication infrastructure **100.**

The illustration in Figure 1 comprises a communication device **110** and cellular radio network nodes **120-1, 120-2, 120-3.** Further, a second communication device **130** is illustrated.

The wireless communication infrastructure 100 may comprise one or more cellular radio networks, which in turn may be based on radio access technologies such as e.g. 3GPP LTE, LTE-Advanced, Evolved Universal Terrestrial Radio Access Network (E-UTRAN), Universal Mobile Telecommunications System (UMTS), Global System for Mobile Communications (originally: Groupe Special Mobile) (GSM)/ Enhanced Data rate for GSM Evolution (GSM/EDGE), Wideband Code Division Multiple Access (WCDMA), Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies e.g. CDMA2000 1x RTT and High Rate Packet Data (HRPD), just to mention some few options.

The cellular radio network may be configured to operate according to the Frequency Division Duplexing (FDD) and/or Time-Division Duplexing (TDD) principle, according to different embodiments.

TDD is an application of time-division multiplexing to separate uplink and downlink signals in time, possibly with a Guard Period situated in the time domain between the uplink and downlink signalling. FDD means that the transmitter and receiver operate at different carrier frequencies, as have previously been discussed.

Different network nodes 120-1, 120-2, 120-3 may thus be working on different radio access technologies and the communication device 110 may be connectable to one or more of these network nodes 120-1, 120-2, 120-3 by using different radio access technologies associated with a subscriber identity/ SIM comprised in the communication device 110 according to some embodiments. However, several subscriber identities/ SIMs comprised in the communication device 110 may be associated with the same radio access technology, according to some embodiments.

The purpose of the illustration in Figure 1 is to provide a simplified, general overview of the methods and nodes, and the functionalities involved. The method and communication device 110 will subsequently, as a non-limiting example, be described in a 3GPP/LTE environment, but the embodiments of the disclosed methods, radio network nodes 120-1, 120-2, 120-3 and communication device 110 may operate in a wireless communication system 100 based on another access technology such as e.g. any of the above enumerated. Thus, although the embodiments of the invention are described based on, and using the lingo of, 3GPP systems, it is by no means limited to 3GPP.

The communication device 110 is configured for communication over the cellular radio communication network via the cellular radio network node 120-1, 120-2, 120-3. Further, the communication device 110 may comprise, or be represented by, a User Equipment (UE), a wireless communication terminal, a mobile cellular phone, a Personal Digital Assistant (PDA), a wireless platform, a mobile station, a portable communication device, a laptop, a computer, a wireless terminal acting as a relay, a relay node, a mobile relay, a Customer Premises Equipment (CPE), a Fixed Wireless Access (FWA) nodes, a personal computer, a video game console, a smartphone, a tablet, a digital audio player or any other kind of device configured to communicate wirelessly with the cellular radio network node 120-1, 120-2, 120-3, according to different embodiments and different vocabulary.

The illustrated, however optional, remote communication device 130 is configured to communicate with the communication device 110 via any of the cellular radio network nodes 120-1, 120-2, 120-3. The remote communication device 130 may be similar to the above described communication device 110, but it may also comprise a stationary telephone and/or stationary computer connected to the wireless communication infrastructure 100 by a wired connection, in some embodiments.

Even though the expression telephone call is utilised herein, the invention is not confined neither to telephones nor to voice calls. The invention may be exercised by any communication device 110 configured for any communication connection to/from the remote communication device 130. For example, according to some embodiments the invention may be exercised by a communication device 110 comprising a computer tablet, or other similar device receiving a Short Message Service (SMS) message, a Multimedia Messaging Service (MMS), a Video Message Service (VMS), an Enhanced Messaging Service (EMS), an e-mail, a video telephony call or similar means of communication from the remote communication device 130.

It is to be noted that the illustrated network setting of two communication devices 110, 130 and three cellular radio network nodes 120-1, 120-2, 120-3 in Figure 1 is to be regarded as a non-limiting example of an embodiment only. The wireless communication system 100 may comprise any other number and/or combination of cellular radio network nodes 120-1, 120-2, 120-3 and/or communication devices 110, 130, although only two instances of communication devices 110, 130 and three cellular radio network nodes 120-1, 120-2, 120-3, respectively, are illustrated in Figure 1, for clarity reasons. A plurality of communication devices 110, 130 and/or cellular radio network nodes 120-1, 120-2, 120-3 may further be involved in some embodiments of the disclosed invention.

Thus whenever "one" or "a/an" communication device 110, 130 and/or cellular radio network node 120-1, 120-2, 120-3 is referred to in the present context, a plurality of communication devices 110, 130 and/or cellular radio network nodes 120-1, 120-2, 120-3 may be involved, according to some embodiments.

The cellular radio network node 120-1, 120-2, 120-3 may according to some embodiments be referred to as e.g. base stations, NodeBs, evolved Node Bs (eNBs, or eNode Bs), base transceiver stations, Access Point Base Stations, base station routers, Radio Base Stations (RBSs), macro base stations, micro base stations, pico base stations, femto base stations, Home eNodeBs, sensors, beacon devices, relay nodes repeaters or any other network nodes configured for communication with communication devices 110, 130 over a wireless interface, depending e.g. of the radio access technology and terminology used. The cellular radio network node controls the radio resource management within a cell, such as e.g. allocating radio resources to the communication devices 110, 130 within the cell and ensuring reliable wireless communication between the cellular radio network node and the communication device 110, 130. The cellular radio network node may typically comprise an eNodeB, e.g. in an LTE-related wireless communication system.

Further, the communication device 110 comprises at least two subscriber identities, such as two Subscriber Identity Modules (SIMs), or a multitude of an arbitrary number of SIMs. The respective subscriber identities may be configured for a particular set of radio access technologies such as GSM, UMTS and/or LTE, according to some embodiments. In some embodiments, the communication device 110 may comprise a plurality of SIMs, associated with the same, or different radio access technologies.

Thus the communication device 110 with multiple subscriptions in different embodiments may comprise a dual SIM, a triple SIM, a quad SIM, a penta SIM, a hexa SIM, a hepta SIM, an octa SIM, a nona SIM, a deca SIM, or just be referred to as a multi SIM comprising n subscription identities, where n is an arbitrary positive integer exceeding one.

Embodiments of the invention aims at enabling full modem functionality, in terms of bit rates and RAT support, for at least two subscriber identities/SIMs in a communication device 110 comprising at least two subscriber identities/SIMs, wherein only one modem has full support and the other modem has limited support.

This may be solved, according to some embodiments, by providing a layer between the subscriber identities/SIM modules and the modems which implements dynamic mapping of the subscriber identities/SIMs to the modems and an assignment algorithm.

Thereby, the cost of a Dual SIM Dual Active mobile phone/ Multi SIM Multi Active mobile phone may be reduced without affecting user experience, thanks to the provided dynamic mapping of modem capability to the SIMs, according to some embodiments.

Thus the communication device 110 may comprise one first modem with full modem capabilities. In order to reduce chip size, and thereby also costs the second modem may be implemented with support of a subset of the full modem capabilities comprising basic services only, such as voice calls and MMS in some embodiments.

The invention may in some embodiments be implemented as a layer between the subscriber identities/SIMs and the modems and may comprise an interface to modem for reading network capabilities, such as e.g. supported RATs and categories, link quality/coverage, location etc. Further, it may comprise an interface to other data, such as e.g. location provided by for example clock, Global Navigation Satellite System (GNSS), Global Positioning System (GPS), or other similar positioning service. Further, an algorithm for selection of functionality for each subscriber identity/SIM may be provided in some embodiments. In addition, functionality that request reconfiguration of the capabilities of the modems, which comprises initiation of deregistration and registration to network may be provided.

Furthermore, embodiments herein may comprise a resource manager that dynamically, depending on subscriber identity/SIM to modem mapping, handles allocation/mapping of e.g. memory, signal and control processors, hard ware accelerators and interconnect.

Embodiments herein may comprise an algorithm for dynamic mapping of the modems to the subscriber identities/SIMs in a way that the user experience is substantially equal to the case when two modems with full capability is implemented.

The basic capabilities of a modem are reported to the network at registration, e.g. RAT support (GSM, UTRA, E-UTRA etc) and maximum bit rate (EGPRS multislot class, UTRA UL/DL categories, E-UTRA category etc). The dynamic mapping of modem functionality requires changes of the reported capabilities when the mapping is changed. Some embodiments may also comprise a mechanism for changing the capabilities, and in case of GSM/UTRA/E-UTRA, a deregistration from network followed by a registration with new capabilities. This may be required whenever the capabilities are changed in order to keep the network aware of actual capabilities of the modems.

Some embodiments of the invention is not limited to dynamic mapping of the complete modems to subscriber identities/SIMs, but may support mapping of modem capabilities individually, e.g. RATs (GSM, UMTS, TDS, LTE etc) and bit rate support per RAT. The need for changing capabilities and RAT support of a SIM, i.e. change the mapping if SIM, may depend on several factors. Some few, non-limiting examples of them may comprise Network coverage, Pricing and/or subscription identity/SIM preferences, e.g. work SIM and private SIM, according to different embodiments.

The embodiment relating to network coverage may be implemented when one of the subscription identities/SIMs is out of coverage on a specific RAT. The mapping of this specific RAT functionality may be dynamically mapped to the other subscription identity/SIM, which in at least some embodiments may be assigned to another network.

In the embodiment relating to pricing, a dynamic switch of the primary subscription identity/SIM and secondary subscription identity/SIM may be based on roaming information, time and/or location. In most scenarios, the primary subscription identity/SIM may have full modem capabilities, i.e. a switch of the primary subscription identity/SIM will result in a change in the modem capability to subscription identity/SIM mapping as well as modem RAT support to SIM mapping, according to some embodiments.

Concerning the embodiment relating to subscription identity/SIM preferences, e.g. work SIM and private SIM, a dynamic switch of primary subscription identity/SIM between work subscription identity/SIM and private subscription identity/SIM may be achieved by using a timer based application or a location based application, such as e.g. GPS coordinates, Cell ID or any other location information known by the communication device 110. In most scenarios, the primary subscription identity/SIM may have full modem capabilities, i.e. a switch of the primary subscription identity/SIM may result in a change in the modem capability to SIM mapping as well as modem RAT support to SIM mapping.

The embodiment described above relates to a non-limiting case comprising a Dual SIM Dual Active communication device 110.

However, embodiments of the invention may be applicable for communication device 110 comprising Multiple SIMs as well, as previously described.

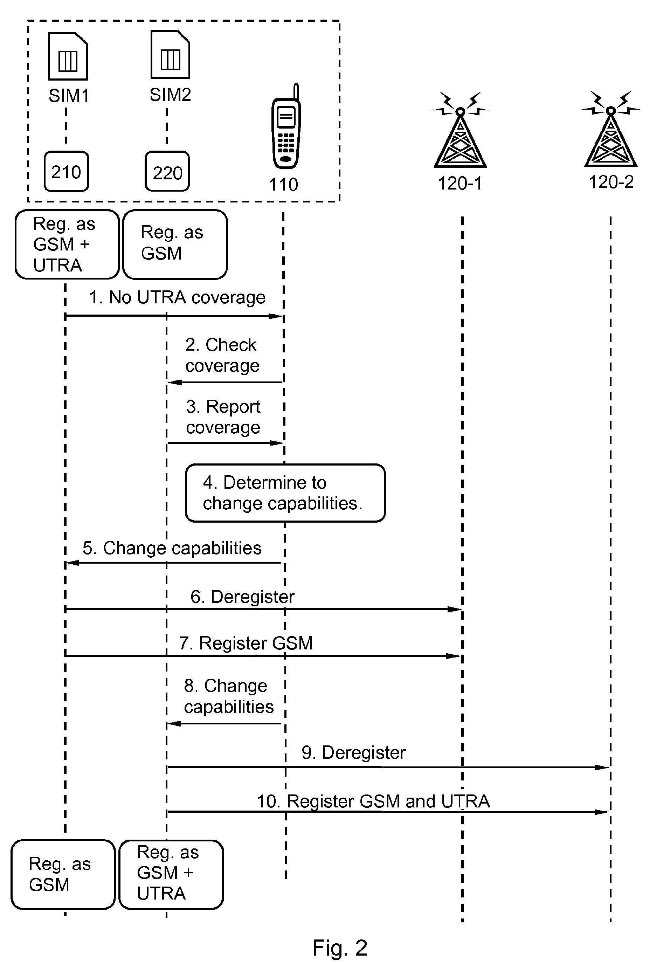

**Figure 2** is a combined flow chart and signalling scheme illustrating an embodiment of the invention comprising dynamic mapping of modem functionality towards the two subscriber identities in a communication device 110 comprising two subscriber identities, for example the dual SIMs in a Dual SIM Dual Active phone.

The communication device 110 may comprise one first modem **210** with full modem capabilities. In order to reduce chip size, and thereby also costs and the size of the communication device 110 the second modem **220** may be implemented with support of a subset of the full modem capabilities comprising basic services only, such as voice calls and MMS in some embodiments.

Figure 2 outlines the interactions between the modems 210, 220 when moving capabilities between the modems 210, 220 due to out of network coverage, according to a non-limiting embodiment of the invention. The first modem 210 is registered as GSM and UTRA and the second modem 220 as GSM only. Further the first subscription identity/SIM, which is the primary subscription identity/SIM is associated with the first modem 210 while the second subscription identity/SIM is the secondary subscription identity/SIM, associated with the second modem 220.

The described actions may be performed in another order than indicated by the enumeration in different embodiments. Further, some actions may be optional and performed only within some alternative embodiments.

In a first action, the first modem 210 may discover and report low, reduced, affected and/or no coverage of the UTRA network.

As long as the UTRA functionality is allocated to the first modem 210 and there is no network coverage, the UTRA modem will not be used.

In a second action, the second modem 220 may be requested to check and report if the associated network is capable of UTRAN and if the communication device 110 is within coverage of the network.

Thus, in a third action, the second modem 220 may indicate UTRA network capability and within coverage.

In a fourth action, based on at least one collected coverage report, it may be determined to adjust capabilities.

In a fifth action, a request to change capabilities is made to the first modem 210.

The first modem 210 then, in a sixth action deregister the UTRA capability of the first modem 210 and register the GSM only capability, in a seventh action, in this non-limiting example of an embodiment.

Furthermore, in an eighth action, a request to change capabilities is made to the second modem 220.

The first modem 210 then, in a ninth action deregister the GSM capability of the second modem 220 and register the UTRA and GSM capability, in a tenth action, in this non-limiting example of an embodiment.

As a result, the UTRA functionality is allocated to the second modem 220 thereby improving the capabilities, potentially both in terms of bit rates and coverage.

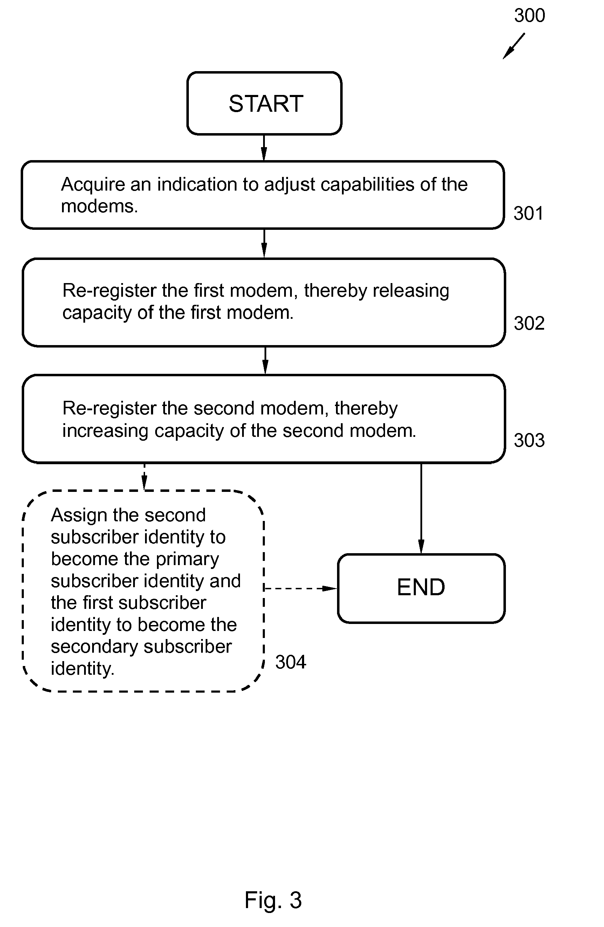

**Figure 3** is a flow chart illustrating embodiments of a method 300 for use in a communication device 110. The communication device 110 is configured for multiple subscriber identities, comprising at least a first subscriber identity and a second subscriber identity. The first subscriber identity is associated with a first modem 210 having a first capability, being a primary subscriber identity which primarily is used by the communication device 110 for communication, and at least a second subscriber identity associated with a second modem 220 having a second capability, being a secondary subscriber identity.

The first subscriber identity and/or the second subscriber identity may comprise any of a Subscriber Identification Module "SIM" card, a Universal Integrated Circuit Card "UICC", a Universal Subscriber Identity Module "USIM", an Internet protocol multimedia Services Identity Module "SIM", a Removable User Identity Module "R-UIM", a CDMA Subscriber Identity Module "CSIM", a Willcom-SIM "W-SIM", according to different embodiments.

The method 300 aims at adjusting the capabilities of the modems 210, 220 for communication in a wireless communication system 100.

The wireless communication system 100 may comprise a cellular network based on any radio access technology of: Global System for Mobile Communications (GSM), Enhanced Data Rates for GSM Evolution (EDGE), Universal Mobile Telecommunications System

(UMTS), Code Division Access (CDMA), (CDMA 2000), Time Division Synchronous CDMA (TD-SCDMA), Long Term Evolution (LTE) within the Third Generation Partnership Project (3GPP), or possibly a similar radio access technology, in different embodiments.

The communication device 110 may be configured for radio communication within wireless communication system 100, according to different embodiments.

In order to appropriately adjust the capabilities of the modems 210, 220, the method 300 may comprise a number of actions 301-304.

It is however to be noted that any, some or all of the described actions 301-304, may be performed in a somewhat different chronological order than the enumeration indicates, or even be performed simultaneously. Further, some of the actions may be optional and only performed in some alternative embodiments, such as e.g. action 304. The method 300 may comprise the following actions:

### Action 301

An indication to adjust capabilities of the modems 210, 220 is acquired.

The action of acquiring the indication may comprise obtaining present time, comparing the present time with a time limit, and generating the indication to adjust capabilities of the modems 210, 220 when the time limit is exceeded by the present time.

In some embodiments, the first and second subscriber identities may comprise work SIM and private SIM and the time limit may comprise the office hours, e.g. 8 Ante Meridiem (AM) to 5 Post Meridiem (PM). Thereby, capabilities may be transferred from the private SIM to the work SIM during office hours and vice versa; capabilities may be transferred from the work SIM to the private SIM during off-office hours, such as e.g. from 5 PM to 8 AM, according to some embodiments.

However, the action of acquiring the indication to adjust capabilities of the modems 210, 220 may in some embodiments comprise obtaining geographic location of the communication device 110, comparing the obtained geographic location of the communication device 110 with a geographic location limit, and generating the indication to adjust capabilities of the modems 210, 220 when the geographic location limit is exceeded by the obtained geographic location of the communication device 110.

The geographic location of the communication device 110 may be obtained by a location service such as e.g. GNSS, GPS or similar, or by obtaining Cell ID or other information related to geographic location from the network 100.

Thus, according to some embodiments, the first subscriber identity and the first modem 210 may be associated with a first geographic location, such as within the borders of a first country and the second subscriber identity and the second modem 220 may be associated with a second geographic location, such as within the borders of a second country. Further, the geographic location limit may comprise the border limit between said first and second countries.

Thereby, capabilities may be transferred from the first subscriber identity associated with the first country to the second subscriber identity associated with the second country, according to some embodiments, as the geographical border between the countries is crossed by the communication device 110, and vice versa. Thereby roaming may be avoided, which reduces communication costs for the user.

According to some embodiments, the communication device 110 may comprise a multitude of subscriber identities, which may be associated with a multitude of different countries, which facilitates travelling abroad.

In some embodiments, the action of acquiring the indication to adjust capabilities of the modems 210, 220 may comprise obtaining a signal indicating a reduction of network coverage or capability of the first modem 210, requesting the second modem 220 to check and report network coverage or capability, and generating the indication to adjust capabilities of the modems 210, 220 to match the respective networks coverage and capability.

Thereby, for example in case e.g. the first subscriber identity is associated with a first RAT, for which a diminished, reduced, disturbed or non-existent coverage is detected, capabilities may be transferred from the first subscriber identity to the second subscriber identity which may be associated with a second RAT, according to some embodiments, and vice versa.

Furthermore, the action of acquiring the indication to adjust capabilities of the modems 210, 220 may comprise generating the indication to adjust capabilities of the modems 210, 220 when the primary subscriber identity is changed from the first subscriber identity 440-1 to the secondary subscriber identity 440-2, according to some embodiments.

The indication to adjust capabilities of the modems 210, 220 may be based on: price, link quality, time of the day/week/month/year, roaming, location of the communication device 110 and/or usage and cost plan for mobile data, SMS, WiFi, voice call, according to some embodiments.

However, in some further embodiments, the action of acquiring the indication to adjust capabilities of the modems 210, 220 may comprise any, some or all of the above described indications.

Thus, in some embodiments, capabilities may be transferred from the first subscriber identity/first modem 210 to the second subscriber identity/ second modem 220 from private SIM to work SIM when the office hours starts, and from Swedish work SIM to Danish work SIM as the geographical border is crossed, and from a first Danish work SIM associated with a first RAT to a second Danish work SIM associated with a second RAT when it is discovered that the first RAT has no, or limited coverage or capability. Other embodiments may comprise the above described embodiments in another similar manner without departing from the scope of the invention.

### Action 302

The first modem 210 is re-registered such that capacity of the first modem 210 is released.

The released capacity of the first modem 210 may comprise radio access technology support, processing capacity, bit rate support, memory capacity, bus capacity, according to some different embodiments.

### Action 303

The second modem 220 is re-registered such that capacity of the second modem 220 is increased.

The increased capacity of the second modem 220 may comprise radio access technology support, processing capacity, bit rate support, memory capacity, bus capacity, according to some different embodiments.

### Action 304

This action may be performed in some alternative embodiments, but not in all embodiments.

The second subscriber identity 440-2 may be assigned to become the primary subscriber identity and the first subscriber identity 440-1 may be assigned to become the secondary subscriber identity.

Thereby, by making such assignment, manual interaction by the user may be omitted when changing primary subscriber identity in a communication device 110, thereby facilitating the everyday existence of the user.

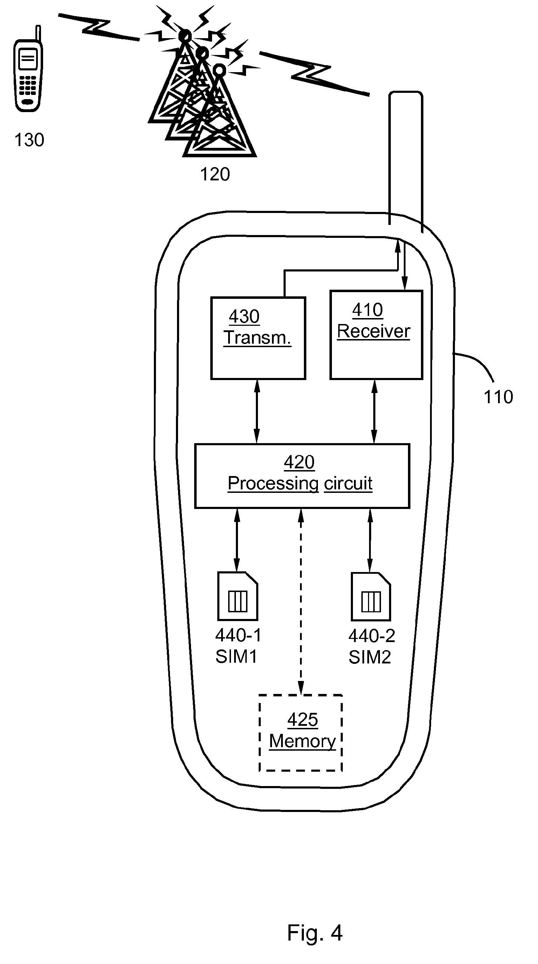

**Figure 4** is a block diagram illustrating a communication device 110 configured for performing at least some of the actions 301-304 comprised in the method 300 for adjusting the capabilities of modems 210, 220 in the communication device 110, which is designed for communication within a wireless communication system 100.

The communication device 110 is configured for multiple subscriber identities, comprising at least a first subscriber identity **440-1** and a second subscriber identity **440-2.** The first subscriber identity 440-1 is associated with a first modem 210 having a first capability, being a primary subscriber identity which primarily is used by the communication device 110 for communication, and at least a second subscriber identity 440-2 associated with a second modem 220 having a second capability, being a secondary subscriber identity.

The first subscriber identity 440-1 and/or the second subscriber identity 440-2 may comprise any of a Subscriber Identification Module SIM" card, a Universal Integrated Circuit Card "UICC", a Universal Subscriber Identity Module "SIM", an Internet protocol multimedia Services Identity Module "SIM", a Removable User Identity Module "R-UIM", a CDMA Subscriber Identity Module "SIM", a Willcom-SIM "W-SIM", according to different embodiments.

The wireless communication system 100 may comprise a cellular network based on any radio access technology of: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE) within the Third Generation Partnership Project (3GPP), or possibly a similar radio access technology, in different embodiments.

In order to appropriately adjust the capabilities of the modems 210, 220, the communication device 110 may comprise a number of units and parts.

For enhanced clarity, any internal electronics or other components of the communication device 110, not completely indispensable for understanding the herein described embodiments has been omitted from Figure 4.

The communication device 110 comprises a processing circuit 420 configured for acquiring an indication to adjust capabilities of the modems 210, 220. The processing circuit 420 is further configured for re-registering the first modem 210, thereby releasing capacity of the first modem 210. In addition, the processing circuit 420 is also configured for re-registering the second modem 220, thereby increasing capacity of the second modem 220.

According to some embodiments, the processing circuit 420 may also be further configured for assigning the second subscriber identity 440-2 to become the primary subscriber identity and the first subscriber identity 440-1 to become the secondary subscriber identity.

The processing circuit 420 may in some further embodiments be configured for obtaining present time, and configured for comparing the present time with a time limit, and also configured for generating the indication to adjust capabilities of the modems 210, 220 when the time limit is exceeded by the present time.

Furthermore, in some alternative embodiments, the processing circuit 420 may also be configured for obtaining geographic location of the communication device 110, configured for comparing the obtained geographic location of the communication device 110 with a geographic location limit, and also configured for generating the indication to adjust capabilities of the modems 210, 220 when the geographic location limit is exceeded by the obtained geographic location of the communication device 110.

Furthermore, according to some embodiments, the processing circuit 420 may be further configured for obtaining a signal indicating a reduction of network coverage, or capability, of the first modem 210, and configured for requesting the second modem 220 to check and report network coverage and/or capability; and in addition configured for generating the indication to adjust capabilities of the modems 210, 220 to match the respective network coverage and/or capability.

Additionally, the processing circuit 420 in some embodiments, may be configured for generating the indication to adjust capabilities of the modems 210, 220 when the primary subscriber identity is changed from the first subscriber identity 440-1 to the secondary subscriber identity 440-2.

The releasing capacity of the first modem 210 when re-registering the first modem 210, and/or the increasing capacity of the second modem 220 when re-registering the second modem 220, may comprise: radio access technology support, processing capacity, bit rate support, memory capacity, bus capacity, according to different embodiments.

The indication to adjust capabilities of the modems 210, 220 may be based on: price, link quality, time of the day/week/month/year, roaming, location of the communication device 110 and/or usage and cost plan for mobile data, SMS, WiFi, voice call.

The processing circuit 420 may comprise e.g. one or more instances of a Central Processing Unit (CPU), a processing unit, a processing circuit, a processor, an Application Specific Integrated Circuit (ASIC), a microprocessor, or other processing logic that may interpret and execute instructions. The herein utilised expression "processing circuit" may thus represent a processing circuitry comprising a plurality of processing circuits, such as e.g. any, some or all of the ones enumerated above.

The processing circuit 420 may further perform data processing functions for inputting, outputting, and processing of data comprising data buffering and device control functions, such as call processing control, user interface control, or the like.

Further, the communication device 110 may comprise a receiver **410** configured for receiving radio signals on a subscription, associated with any subscriber identity 440-1, 440-2, from another communication device 130. The radio signals may be received from e.g. the other communication device 130, via the network node 120, or any other entity configured for wireless communication according to some embodiments.

The communication device 110 may further, according to some alternative embodiments comprise a transmitter **430,** configured for initiating communication using any subscriber identity 440-1, 440-2, when the user of the communication device 110 selects to initiate communication.

Furthermore, the communication device 110 may comprise a memory **425.** The optional memory 425 may comprise a physical device utilised to store data or programs i.e. sequences of instructions, on a temporary or permanent basis. According to some embodiments, the memory 425 may comprise integrated circuits comprising silicon-based transistors. Further, the memory 425 may be volatile or non-volatile.

Any, some or all of the actions 301-304 to be performed in the communication device 110 may be implemented through one or more processing circuits 420 in the communication device 110, together with computer program code for performing the functions of the actions 301-304. Thus a computer program product, comprising instructions for performing the actions 301-304 in the communication device 110 may be configured for performing the method 300 for adjusting the capabilities of the modems 210, 220 according to any of actions 301-304, when the computer program is loaded in a processing circuit 420 of the communication device 110.

The computer program product mentioned above may be provided for instance in the form of a data carrier carrying computer program code for performing at least some of the actions 301-304 according to some embodiments when being loaded into the processing circuit 420. The data carrier may be e.g. a hard disk, a CD ROM disc, a memory stick, an optical storage device, a magnetic storage device or any other appropriate medium such as a disk or tape that may hold machine readable data in a non transitory manner. The computer program product may furthermore be provided as computer program code on a server and downloaded to the communication device 110 remotely, e.g. over an Internet or an intranet connection.

The terminology used in the detailed description of the invention as illustrated in the accompanying drawings is not intended to be limiting of the described method 300 and communication device 110, which instead are limited by the enclosed claims.

As used herein, the term "and/or" comprises any and all combinations of one or more of the associated listed items. In addition, the singular forms "a", "an" and "the" are to be interpreted as "at least one", thus also comprising a plurality, unless expressly stated otherwise. It will be further understood that the terms "includes", "comprises", "including" and/or "comprising", specifies the presence of stated features, actions, integers, steps, operations, elements, and/or components, but do not preclude the presence or addition of one or more other features, actions, integers, steps, operations, elements, components, and/or groups thereof.

## Claims

1. A method (300) in a communication device (110) configured for multiple subscriber identities (440-1, 440-2), comprising a first subscriber identity (440-1) associated with a first modem (210) having a first capability, being a primary subscriber identity, used by the communication device (110) for communication, and at least a second subscriber identity (440-2) associated with a second modem (220) having a second capability, being a secondary subscriber identity, for adjusting the capabilities of the modems (210, 220), comprising :
acquiring (301) an indication to adjust capabilities of the modems (210, 220);
re-registering (302) the first modem (210), thereby releasing capacity of the first modem (210); and
re-registering (303) the second modem (220), thereby increasing capacity of the second modem (220); wherein
the action of acquiring (301) the indication comprises:
obtaining a signal indicating a reduction of network coverage or capability of the first modem (210),
requesting the second modem (220) to check and report network coverage or capability, and
generating the indication to adjust capabilities of the modems (210, 220) to match the respective network coverage and capability, such that in the case the first subscriber identity is associated with a first radio access technology, for which a diminished, reduced, disturbed or non-existent coverage is detected, modem capabilities are transferred from the first subscriber identity to the second subscriber identity which may be associated with a second radio access technology, and vice versa.

2. The method (300) according to claim 1, further comprising:
assigning (304) the second subscriber identity (440-2) to become the primary subscriber identity and the first subscriber identity (440-1) to become the secondary subscriber identity.

3. The method (300) according to claim 1, wherein the action of acquiring (301) the indication comprises:
obtaining present time,
comparing the present time with a time limit, and
generating the indication to adjust capabilities of the modems (210, 220) when the time limit is exceeded by the present time.

4. The method (300) according to claim 1, wherein the action of acquiring (301) the indication comprises:
obtaining geographic location of the communication device (110),
comparing the obtained geographic location of the communication device (110) with a geographic location limit, and
generating the indication to adjust capabilities of the modems (210, 220) when the geographic location limit is exceeded by the obtained geographic location of the communication device (110).

5. The method (300) according to claim 1, wherein the action of acquiring (301) the indication comprises:
generating the indication to adjust capabilities of the modems (210, 220) when the primary subscriber identity is changed from the first subscriber identity (440-1) to the secondary subscriber identity (440-2).

6. The method (300) according to claim 1, wherein the releasing capacity of the first modem (210) in the action of re-registering (302) the first modem (210), and/or the increasing capacity of the second modem (220) in the action of re-registering (303) the second modem (220), comprises: radio access technology support, processing capacity, bit rate support, memory capacity, bus capacity.

7. The method (300) according to claim 1, wherein the first subscriber identity (440-1) and the second subscriber identity (440-2) comprises any of a Subscriber Identification Module "SIM" card, a Universal Integrated Circuit Card "UICC", a Universal Subscriber Identity Module "USIM", an Internet protocol multimedia Services Identity Module "I SIM", a Removable User Identity Module "R-UIM", a CDMA Subscriber Identity Module "CSIM", and/or a Willcom-SIM "W-SIM".

8. The method (300) according to claim 2, wherein the indication to adjust capabilities of the modems (210, 220) is based on: price, link quality, time of the day/week/month/year, roaming, location of the communication device (110) and/or usage and cost plan for mobile data, SMS, WiFi, voice call.

9. The method (300) according to claim 1, wherein the communication device (110) comprising the at least one first subscriber identity (440-1) and the second subscriber identity (440-2) is configured for communication on any technology of: Global System for Mobile Communications "GSM", Enhanced Data Rates for GSM Evolution "EDGE", Universal Mobile Telecommunications System "UMTS", Code Division Access "CDMA", "CDMA 2000", Time Division Synchronous CDMA "TD-SCDMA", Long Term Evolution "LTE".

10. A communication device (110) configured for multiple subscriber identities (440-1, 440-2), comprising a first subscriber identity (440-1) associated with a first modem (210) having a first capability, being a primary subscriber identity, used by the communication device (110) for communication, and at least a second subscriber identity (440-2) associated with a second modem (220) having a second capability, being a secondary subscriber identity, for adjusting the capabilities of the modems (210, 220), comprising :
a processing circuit (420) configured for acquiring an indication to adjust capabilities of the modems (210, 220); and configured for re-registering the first modem (210), thereby releasing capacity of the first modem (210); and also configured for re-registering the second modem (220), thereby increasing capacity of the second modem (220), the processing circuit (420) bering further configured for obtaining a signal indicating a reduction of network coverage, or capability, of the first modem (210), and configured for requesting the second modem (220) to check and report network coverage and/or capability; and in addition configured for generating the indication to adjust capabilities of the modems (210, 220) to match the respective network coverage and/or capability, such that in the case the first subscriber identity is associated with a first radio access technology, for which a diminished, reduced, disturbed or non-existent coverage is detected, modem capabilities are transferred from the first subscriber identity to the second subscriber identity which may be associated with a second radio access technology, and vice versa.

11. The communication device (110) according to claim 10, wherein the processing circuit (420) is further configured for assigning the second subscriber identity (440-2) to become the primary subscriber identity and the first subscriber identity (440-1) to become the secondary subscriber identity.

12. The communication device (110) according to claim 10, wherein the processing circuit (420) is further configured for obtaining present time, and configured for comparing the present time with a time limit, and also configured for generating the indication to adjust capabilities of the modems (210, 220) when the time limit is exceeded by the present time .

13. The communication device (110) according to claim 11, wherein the processing circuit (420) is further configured for obtaining geographic location of the communication device (110), configured for comparing the obtained geographic location of the communication device (110) with a geographic location limit, and also configured for generating the indication to adjust capabilities of the modems (210, 220) when the geographic location limit is exceeded by the obtained geographic location of the communication device (110).

14. The communication device (110) according to claim 10, wherein the processing circuit (420) is further configured for generating the indication to adjust capabilities of the modems (210, 220) when the primary subscriber identity is changed from the first subscriber identity (440-1) to the secondary subscriber identity (440-2).

15. The communication device (110) according to claim 10, wherein the releasing capacity of the first modem (210) in the action of re-registering the first modem (210), and/or the increasing capacity of the second modem (220) in the action of re-registering the second modem (220), comprises: radio access technology support, processing capacity, bit rate support, memory capacity, bus capacity.

16. The communication device (110) according to claim 10, wherein the first subscriber identity (440-1) and the second subscriber identity (440-2) comprises any of a Subscriber Identification Module "SIM" card, a Universal Integrated Circuit Card "UICC", a Universal Subscriber Identity Module "USIM", an Internet protocol multimedia Services Identity Module "ISIM", a Removable User Identity Module "R-UIM", a CDMA Subscriber Identity Module "CSIM" and/or a Willcom-SIM "W-SIM".

17. The communication device (110) according to claim 10, wherein the indication to adjust capabilities of the modems (210, 220) is based on: price, link quality, time of the day/week/month/year, roaming, location of the communication device (110) and/or usage and cost plan for mobile data, SMS, WiFi, voice call.

18. The communication device (110) according to claim 10, configured for communication on any technology of: Global System for Mobile Communications "GSM", Enhanced Data Rates for GSM Evolution "EDGE", Universal Mobile Telecommunications System "UMTS", Code Division Access "CDMA", "CDMA 2000", Time Division Synchronous CDMA "TD-SCDMA", Long Term Evolution "LTE".

19. Computer program product in a communication device (110) according to any of claims 10-18, configured for performing the method (300) for adjusting the capabilities of the modems (210, 220) according to any of claims 1-10, when the computer program product is loaded in a processing circuit (420) of the communication device (110).

## Patentansprüche

1. Verfahren (300) in einer Kommunikationsvorrichtung (110), die für mehrere Teilnehmerkennungen (440-1, 440-2) konfiguriert ist, die eine erste Teilnehmerkennung (440-1), die einem ersten Modem (210) zugeordnet ist, das eine erste Fähigkeit aufweist, und die eine primäre Teilnehmerkennung ist, die durch die Kommunikationsvorrichtung (110) zur Kommunikation verwendet wird, und wenigstens eine zweite Teilnehmerkennung (440-2), die einem zweiten Modem (220) zugeordnet ist, das eine zweite Fähigkeit aufweist, und die eine sekundäre Teilnehmerkennung ist, umfassen, zum Anpassen der Fähigkeiten der Modems (210, 220), wobei das Verfahren Folgendes umfasst:
Erfassen (301) einer Angabe, Fähigkeiten der Modems (210, 220) anzupassen;
Neueintragen (302) des ersten Modems (210), dadurch Freigeben von Kapazität des ersten Modems (210); und
Neueintragen (303) des zweiten Modems (220), dadurch Erhöhen der Kapazität des zweiten Modems (220);
wobei
der Vorgang zum Erfassen (301) der Angabe Folgendes umfasst:
Erhalten eines Signals, das eine Reduktion der Netzabdeckung oder Fähigkeit des ersten Modems (210) angibt,
Anfordern, dass das zweite Modem (220) die Netzabdeckung oder Fähigkeit überprüft und meldet, und
Erzeugen der Angabe, die Fähigkeiten der Modems (210, 220) anzupassen, um mit der jeweiligen Netzabdeckung und Fähigkeit übereinzustimmen, so dass in dem Fall, wenn die erste Teilnehmerkennung einer ersten Funkzugangstechnologie zugeordnet ist, für die eine verkleinerte, reduzierte, gestörte oder nicht existierende Abdeckung detektiert wird, Modemfähigkeiten von der ersten Teilnehmerkennung zu der zweiten Teilnehmerkennung, die einer zweiten Funkzugangstechnologie zugeordnet sein kann, übertragen werden, und umgekehrt.

2. Verfahren (300) nach Anspruch 1, das ferner Folgendes umfasst:
Zuweisen (304) der zweiten Teilnehmerkennung (440-2), zu der primären Teilnehmerkennung zu werden, und der ersten Teilnehmerkennung (440-1), zu der sekundären Teilnehmerkennung zu werden.

3. Verfahren (300) nach Anspruch 1, wobei der Vorgang zum Erfassen (301) der Angabe Folgendes umfasst:
Erhalten der aktuellen Zeit,
Vergleichen der aktuellen Zeit mit einer Zeitgrenze, und
Erzeugen einer Angabe, um Fähigkeiten der Modems (210, 220) anzupassen, wenn die Zeitgrenze durch die aktuelle Zeit überschritten ist.

4. Verfahren (300) nach Anspruch 1, wobei der Vorgang zum Erfassen (301) der Angabe Folgendes umfasst:
Erhalten des geographischen Standorts der Kommunikationsvorrichtung (110),
Vergleichen des erhaltenen geographischen Standorts der Kommunikationsvorrichtung (110) mit einer Grenze für den geographischen Standort, und
Erzeugen einer Angabe, um Fähigkeiten der Modems (210, 220) anzupassen, wenn die Grenze für den geographischen Standort durch den erhaltenen geographischen Standort der Kommunikationsvorrichtung (110) überschritten ist.

5. Verfahren (300) nach Anspruch 1, wobei der Vorgang zum Erfassen (301) der Angabe Folgendes umfasst:
Erzeugen einer Angabe, um Fähigkeiten der Modems (210, 220) anzupassen, wenn die primäre Teilnehmerkennung von der ersten Teilnehmerkennung (440-1) zu der sekundären Teilnehmerkennung (440-2) geändert wird.

6. Verfahren (300) nach Anspruch 1, wobei das Freigeben von Kapazität des ersten Modems (210) in dem Vorgang zum Neueintragen (302) des ersten Modems (210) und/oder das Erhöhen der Kapazität des zweiten Modems (220) in dem Vorgang zum Neueintragen (303) des zweiten Modems (220) Folgendes umfasst:
Funkzugangstechnologieunterstützung, Verarbeitungskapazität, Bitratenunterstützung, Speicherkapazität, Buskapazität.

7. Verfahren (300) nach Anspruch 1, wobei die erste Teilnehmerkennung (440-1) und die zweite Teilnehmerkennung (440-2) irgendeines aus einer Teilnehmeridentifikationsmodul-Karte, "SIM"-Karte, einer universellen Karte mit integrierter Schaltung, "UICC", einem universellen Teilnehmeridentifikationsmodul, "USIM", einem Internetprotokoll-Multimediadienst-Kennungsmodul, "I SIM", einem herausnehmbaren Anwenderkennungsmodul, "R-UIM", einem CDMA-Teilnehmerkennungsmodul, "CSIM", und/oder einem Willcom-SIM, "W-SIM", umfassen.

8. Verfahren (300) nach Anspruch 2, wobei die Angabe, Fähigkeiten der Modems (210, 220) anzupassen, auf Folgendem basiert: Preis, Verbindungsstreckenqualität, Zeit des/der Tags/Woche/Monats/Jahrs, Aufenthalt im fremden Netz, Standort der Kommunikationsvorrichtung (110) und/oder Nutzungs- und Kostenplan für mobile Daten, SMS, WiFi, Sprachanruf.

9. Verfahren (300) nach Anspruch 1, wobei die Kommunikationsvorrichtung (110), die die wenigstens eine erste Teilnehmerkennung (440-1) und die zweite Teilnehmerkennung (440-2) umfasst, konfiguriert ist zur Kommunikation über jede Technologie aus: globales System für Mobilkommunikation, "GSM", verbesserte Datenraten für GSM-Entwicklung, "EDGE", universelles Mobiltelekommunikationssystem, "UMTS", Codemultiplexzugriff, "CDMA", "CDMA 2000", synchrones Zeitmultiplex-CDMA, "TD-SCDMA", Langzeitentwicklung, "LTE".

10. Kommunikationsvorrichtung (110), die konfiguriert ist für mehrere Teilnehmerkennungen (440-1, 440-2), die eine erste Teilnehmerkennung (440-1), die einem ersten Modem (210) zugeordnet ist, das eine erste Fähigkeit aufweist, und die eine primäre Teilnehmerkennung ist, die durch die Kommunikationsvorrichtung (110) zur Kommunikation verwendet wird, und wenigstens eine zweite Teilnehmerkennung (440-2), die einem zweiten Modem (220) zugeordnet ist, das eine zweite Fähigkeit aufweist, und die eine sekundäre Teilnehmerkennung ist, umfassen, zum Anpassen der Fähigkeiten der Modems (210, 220), wobei die Vorrichtung Folgendes umfasst:
eine Verarbeitungsschaltung (420), die zum Erfassen einer Angabe, Fähigkeiten der Modems (210, 220) anzupassen, konfiguriert ist; und zum Neueintragen des ersten Modems (210), dadurch Freigeben von Kapazität des ersten Modems (210), konfiguriert ist und außerdem zum Neueintragen des zweiten Modems (220), dadurch Erhöhen der Kapazität des zweiten Modems (220), konfiguriert ist,
wobei die Verarbeitungsschaltung (420) ferner zum Erhalten eines Signals, das eine Reduktion der Netzabdeckung oder Fähigkeit des ersten Modems (210) angibt, konfiguriert ist und zum Anfordern, dass das zweite Modem (220) Netzabdeckung und/oder Fähigkeit überprüft und berichtet, konfiguriert ist; und zusätzlich zum Erzeugen der Angabe, Fähigkeiten der Modems (210, 220) anzupassen, um mit der jeweiligen Netzabdeckung und/oder Fähigkeit übereinzustimmen, konfiguriert ist, so dass in dem Fall, wenn die erste Teilnehmerkennung einer ersten Funkzugangstechnologie zugeordnet ist, für die eine verkleinerte, reduzierte, gestörte oder nicht existierende Abdeckung detektiert wird, Modemfähigkeiten von der ersten Teilnehmerkennung zu der zweiten Teilnehmerkennung, die einer zweiten Funkzugangstechnologie zugeordnet sein kann, übertragen werden, und umgekehrt.

11. Kommunikationsvorrichtung (110) nach Anspruch 10, wobei die Verarbeitungsschaltung (420) ferner zum Zuweisen der zweiten Teilnehmerkennung (440-2), zu der primären Teilnehmerkennung zu werden, und der ersten Teilnehmerkennung (440-1), zu der sekundären Teilnehmerkennung zu werden, konfiguriert ist.

12. Kommunikationsvorrichtung (110) nach Anspruch 10, wobei die Verarbeitungsschaltung (420) ferner zum Erhalten der aktuellen Zeit konfiguriert ist und zum Vergleichen der aktuellen Zeit mit einer Zeitgrenze konfiguriert ist, und außerdem zum Erzeugen der Angabe, die Fähigkeiten der Modems (210, 220) anzupassen, wenn die Zeitgrenze durch die aktuelle Zeit überschritten ist, konfiguriert ist.

13. Kommunikationsvorrichtung (110) nach Anspruch 11, wobei die Verarbeitungsschaltung (420) ferner zum Erhalten des geographischen Standorts der Kommunikationsvorrichtung (110) konfiguriert ist, zum Vergleichen des erhaltenen geographischen Standorts der Kommunikationsvorrichtung (110) mit einer Grenze für den geographischen Standort konfiguriert ist, und außerdem zum Erzeugen der Angabe, die Fähigkeiten der Modems (210, 220) anzupassen, wenn die Grenze für den geographischen Standort durch den erhaltenen geographischen Standort der Kommunikationsvorrichtung (110) überschritten ist, konfiguriert ist.

14. Kommunikationsvorrichtung (110) nach Anspruch 10, wobei die Verarbeitungsschaltung (420) ferner zum Erzeugen der Angabe, die Fähigkeiten der Modems (210, 220) anzupassen, wenn die primäre Teilnehmerkennung von der ersten Teilnehmerkennung (440-1) zu der sekundären Teilnehmerkennung (440-2) geändert wird, konfiguriert ist.

15. Kommunikationsvorrichtung (110) nach Anspruch 10, wobei das Freigeben von Kapazität des ersten Modems (210) in dem Vorgang zum Neueintragen des ersten Modems (201) und/oder das Erhöhen der Kapazität des zweiten Modems (220) in dem Vorgang zum Neueintragen (303) des zweiten Modems (220) Folgendes umfasst: Funkzugangstechnologieunterstützung, Verarbeitungskapazität, Bitratenunterstützung, Speicherkapazität, Buskapazität.

16. Kommunikationsvorrichtung (110) nach Anspruch 10, wobei die erste Teilnehmerkennung (440-1) und die zweite Teilnehmerkennung (440-2) irgendeines aus einer Teilnehmeridentifikationsmodul-Karte, "SIM"-Karte, einer universellen Karte mit integrierter Schaltung, "UICC", einem universellen Teilnehmeridentifikationsmodul, "USIM", einem Internetprotokoll-Multimediadienst-Kennungsmodul, "ISIM", einem herausnehmbaren Anwenderkennungsmodul, "R-UIM", einem CDMA-Teilnehmerkennungsmodul, "CSIM", und/oder einem Willcom-SIM, "W-SIM", umfassen.

17. Kommunikationsvorrichtung (110) nach Anspruch 10, wobei die Angabe, Fähigkeiten der Modems (210, 220) anzupassen, auf Folgendem basiert: Preis, Verbindungsstreckenqualität, Zeit des/der Tags/Woche/Monats/Jahrs, Aufenthalt im fremden Netz, Aufenthaltsort der Kommunikationsvorrichtung (110) und/oder Nutzungs- und Kostenplan für mobile Daten, SMS, WiFi, Sprachanruf.

18. Kommunikationsvorrichtung (110) nach Anspruch 10, die konfiguriert ist zur Kommunikation nach jeder Technologie aus: globales System für Mobilkommunikation, "GSM", verbesserte Datenraten für GSM-Entwicklung, "EDGE", universelles Mobiltelekommunikationssystem, "UMTS", Codemultiplexzugriff, "CDMA", "CDMA 2000", synchrones Zeitmultiplex-CDMA, "TD-SCDMA", Langzeitentwicklung "LTE".

19. Computerprogrammprodukt in einer Kommunikationsvorrichtung (110) nach einem der Ansprüche 10-18, das konfiguriert ist zum Ausführen des Verfahrens (300) zum Anpassen der Fähigkeiten der Modems (210, 220) nach einem der Ansprüche 1-10, wenn das Computerprogrammprodukt in eine Verarbeitungsschaltung (420) der Kommunikationsvorrichtung (110) geladen wird.

## Revendications

1. Procédé (300) dans un dispositif de communication (110) configuré pour plusieurs identités d'abonné (440-1, 440-2), comprenant une première identité d'abonné (440-1) associée à un premier modem (210) ayant une première capacité, qui est une identité d'abonné primaire, utilisée par le dispositif de communication (110) pour une communication, et au moins une deuxième identité d'abonné (440-2) associée à un deuxième modem (220) ayant une deuxième capacité, qui est une identité d'abonné secondaire, permettant d'ajuster les capacités des modems (210, 220), comprenant les étapes suivantes :
acquérir (301) une indication permettant d'ajuster des capacités des modems (210, 220);
réenregistrer (302) le premier modem (210), libérant ainsi la capacité du premier modem (210) ; et
réenregistrer (303) le deuxième modem (220), augmentant ainsi la capacité du deuxième modem (220);
l'action consistant à acquérir (301) l'indication comprenant :
obtenir un signal indiquant une réduction de couverture réseau ou de capacité du premier modem (210),
demander au deuxième modem (220) de vérifier et de transmettre une couverture réseau ou une capacité, et
générer l'indication permettant d'ajuster les capacités des modems (210, 220) afin d'adapter les couverture réseau et capacité respectives, de sorte que dans le cas où la première identité d'abonné est associée à une première technologie d'accès radio, pour laquelle une couverture diminuée, réduite, perturbée ou non existante est détectée, des capacités de modem sont transférées depuis la première identité d'abonné vers la deuxième identité d'abonné qui peut être associée à une deuxième technologie d'accès radio, et vice versa.

2. Procédé (300) selon la revendication 1, comprenant en outre l'étape suivante :
affecter (304) la deuxième identité d'abonné (440-2) comme l'identité d'abonné primaire et la première identité d'abonné (440-1) comme l'identité d'abonné secondaire.

3. Procédé (300) selon la revendication 1, dans lequel l'action consistant à acquérir (301) l'indication comprend les étapes suivantes :
obtenir un temps présent,
comparer le temps présent à une limite de temps, et
générer l'indication permettant d'ajuster les capacités des modems (210, 220) lorsque la limite de temps est excédée par le temps présent.

4. Procédé (300) selon la revendication 1, dans lequel l'action consistant à acquérir (301) l'indication comprend les étapes suivantes :
obtenir un emplacement géographique du dispositif de communication (110),
comparer l'emplacement géographique obtenu du dispositif de communication (110) avec une limite d'emplacement géographique, et
générer l'indication permettant d'ajuster les capacités des modems (210, 220) lorsque la limite d'emplacement géographique est excédée par l'emplacement géographique obtenu du dispositif de communication (110).

5. Procédé (300) selon la revendication 1, dans lequel l'action consistant à acquérir (301) l'indication comprend l'étape suivante :
générer l'indication permettant d'ajuster les capacités des modems (210, 220) lorsque l'identité d'abonné primaire est changée depuis la première identité d'abonné (440-1) vers l'identité d'abonné secondaire (440-2).

6. Procédé (300) selon la revendication 1, dans lequel la capacité de libération du premier modem (210) dans l'action consistant à réenregistrer (302) le premier modem (210), et/ou la capacité d'augmentation du deuxième modem (220) dans l'action consistant à réenregistrer (303) le deuxième modem (220), comprennent :
une prise en charge de technologie d'accès radio, une capacité de traitement, une prise en charge de débit binaire, une capacité mémoire, une capacité de bus.

7. Procédé (300) selon la revendication 1, dans lequel la première identité d'abonné (440-1) et la deuxième identité d'abonné (440-2) comprennent un élément quelconque parmi une carte de module d'identification d'abonné « SIM », une carte de circuit intégré universel « UICC », un module d'identité d'abonné universel « USIM », un module d'identité de services multimédia IP « I SIM », un module d'identité d'utilisateur amovible « R-UIM », un module d'identité d'abonné CDMA « CSIM », et/ou un Willcom-SIM « W-SIM ».

8. Procédé (300) selon la revendication 2, dans lequel l'indication permettant d'ajuster les capacités des modems (210, 220) est basée sur : un prix, une qualité de liaison, un moment du jour/de la semaine/du mois/de l'année, une itinérance, un emplacement du dispositif de communication (110) et/ou une utilisation et un plan de coût pour des données mobiles, SMS, WiFi, appel vocal.

9. Procédé (300) selon la revendication 1, dans lequel le dispositif de communication (110) comprenant ladite première identité d'abonné (440-1) et la deuxième identité d'abonné (440-2) est configuré pour une communication sur une technologie quelconque parmi : système mondial de communications mobiles « GSM », débits de données améliorés pour une évolution GSM « EDGE », système universel de télécommunications mobiles « UMTS », accès par répartition en code « CDMA », « CDMA 2000 », CDMA synchrone par répartition dans le temps « TD-SCDMA », évolution à long terme « LTE ».

10. Dispositif de communication (110) configuré pour plusieurs identités d'abonné (440-1, 440-2), comprenant une première identité d'abonné (440-1) associée à un premier modem (210) ayant une première capacité, qui est une identité d'abonné primaire, utilisée par le dispositif de communication (110) pour une communication, et au moins une deuxième identité d'abonné (440-2) associée à un deuxième modem (220) ayant une deuxième capacité, qui est une identité d'abonné secondaire, permettant d'ajuster les capacités des modems (210, 220), comprenant :
un circuit de traitement (420) configuré pour acquérir une indication permettant d'ajuster des capacités des modems (210, 220) ; et configuré pour réenregistrer le premier modem (210), libérant ainsi la capacité du premier modem (210); et
également configuré pour réenregistrer le deuxième modem (220), augmentant ainsi la capacité du deuxième modem (220),
le circuit de traitement (420) étant en outre configuré pour obtenir un signal indiquant une réduction de couverture réseau, ou de capacité, du premier modem (210), et configuré pour demander au deuxième modem (220) de vérifier et de transmettre une couverture réseau et/ou une capacité ; et configuré en outre pour générer l'indication permettant d'ajuster les capacités des modems (210, 220) pour adapter les couverture réseau et/ou capacité respectives, de sorte que dans le cas où la première identité d'abonné est associée à une première technologie d'accès radio, pour laquelle une couverture diminuée, réduite, perturbée ou non existante est détectée, des capacités de modem sont transférées depuis la première identité d'abonné vers la deuxième identité d'abonné qui peut être associée à une deuxième technologie d'accès radio, et vice versa.

11. Dispositif de communication (110) selon la revendication 10, dans lequel le circuit de traitement (420) est en outre configuré pour affecter la deuxième identité d'abonné (440-2) comme l'identité d'abonné primaire et la première identité d'abonné (440-1) comme l'identité d'abonné secondaire.

12. Dispositif de communication (110) selon la revendication 10, dans lequel le circuit de traitement (420) est en outre configuré pour obtenir un temps présent, et configuré pour comparer le temps présent à une limite de temps, et également configuré pour générer l'indication permettant d'ajuster les capacités des modems (210, 220) lorsque la limite de temps est excédée par le temps présent.

13. Dispositif de communication (110) selon la revendication 11, dans lequel le circuit de traitement (420) est en outre configuré pour obtenir un emplacement géographique du dispositif de communication (110), configuré pour comparer l'emplacement géographique obtenu du dispositif de communication (110) avec une limite d'emplacement géographique, et également configuré pour générer l'indication permettant d'ajuster les capacités des modems (210, 220) lorsque la limite d'emplacement géographique est excédée par l'emplacement géographique obtenu du dispositif de communication (110).

14. Dispositif de communication (110) selon la revendication 10, dans lequel le circuit de traitement (420) est en outre configuré pour générer l'indication permettant d'ajuster les capacités des modems (210, 220) lorsque l'identité d'abonné primaire est changée depuis la première identité d'abonné (440-1) vers l'identité d'abonné secondaire (440-2).

15. Dispositif de communication (110) selon la revendication 10, dans lequel la capacité de libération du premier modem (210) dans l'action consistant à réenregistrer le premier modem (210), et/ou la capacité d'augmentation du deuxième modem (220) dans l'action consistant à réenregistrer le deuxième modem (220), comprennent : une prise en charge de technologie d'accès radio, une capacité de traitement, une prise en charge de débit binaire, une capacité mémoire, une capacité de bus.

16. Dispositif de communication (110) selon la revendication 10, dans lequel la première identité d'abonné (440-1) et la deuxième identité d'abonné (440-2) comprennent un élément quelconque parmi une carte de module d'identification d'abonné « SIM », une carte de circuit intégré universel « UICC », un module d'identité d'abonné universel « USIM », un module d'identité de services multimédia IP « ISIM », un module d'identité d'utilisateur amovible « R-UIM », un module d'identité d'abonné CDMA « CSIM », et/ou un Willcom-SIM « W-SIM ».

17. Dispositif de communication (110) selon la revendication 10, dans lequel l'indication permettant d'ajuster les capacités des modems (210, 220) est basée sur : un prix, une qualité de liaison, un moment du jour/de la semaine/du mois/de l'année, une itinérance, un emplacement du dispositif de communication (110) et/ou une utilisation et un plan de coût pour des données mobiles, SMS, WiFi, appel vocal.

18. Dispositif de communication (110) selon la revendication 10, configuré pour une communication sur une technologie quelconque parmi : système mondial de communications mobiles « GSM », débits de données améliorés pour une évolution GSM « EDGE », système universel de télécommunications mobiles « UMTS », accès par répartition en code « CDMA », « CDMA 2000 », CDMA synchrone par répartition dans le temps « TD-SCDMA », évolution à long terme « LTE ».

19. Produit programme d'ordinateur dans un dispositif de communication (110) selon l'une quelconque des revendications 10-18, configuré pour exécuter le procédé (300) permettant d'ajuster les capacités des modems (210, 220) selon l'une quelconque des revendications 1-10, lorsque le produit programme d'ordinateur est chargé dans un circuit de traitement (420) du dispositif de communication (110).
